# EUROPÄISCHE PATENTSCHRIFT

(11) **EP 1 045 773 B1**
(45) Veröffentlichungstag und Bekanntmachung des Hinweises auf die Patenterteilung: **26.05.2004**
(21) Anmeldenummer: 99948657.4
(22) Anmeldetag: 20.07.1999
(51) Int. Cl.: B60N 2/48, B60R 21/32

(54) **VORRICHTUNG ZUR SIGNALÜBERTRAGUNG AN EINE ODER MEHRERE IN EINER KOPFSTÜTZE EINES FAHRZEUGSITZES INTEGRIERTE SCHALTUNGEN**
DEVICE FOR TRANSMITTING SIGNALS TO ONE OR MORE CIRCUITS INTEGRATED INTO THE HEAD REST OF A MOTOR VEHICLE SEAT
DISPOSITIF POUR TRANSMETTRE DES SIGNAUX A UN OU PLUSIEURS CIRCUITS INTEGRES DANS UN APPUI-TETE DE SIEGE DE VEHICULE

(30) Priorität: 14.10.1998 DE 19847302
(43) Veröffentlichungstag der Anmeldung: 25.10.2000
(73) Patentinhaber: ROBERT BOSCH GMBH, 70442 Stuttgart (DE)
(72) Erfinder: HAMBSCH, Katja, D-75015 Bretten (DE); BAUER, Joachim, D-71720 Oberstenfeld-Prevorst (DE)
(86) Internationale Anmeldenummer: PCT/DE1999/002236
(87) Internationale Veröffentlichungsnummer: WO 2000/021785

(56) Entgegenhaltungen:
- DE-A- 3 925 995
- DE-C- 19 651 670
- US-A- 5 683 103
- US-A- 5 748 473

## Beschreibung

### Stand der Technik

Die vorliegende Erfindung betrifft eine Vorrichtung zum Übertragen von Signalen an ein oder mehrere in einer Kopfstütze eines Fahrzeugsitzes integrierte Schaltungseinheiten (solche Vorrichtungen sind allgemein bekannt).

Um den Schutz von Fahrzeuginsassen bei Unfällen weiterhin zu verbessern, werden die Rückhaltesysteme in Fahrzeugen immer komplexer. Dazu gehört auch, daß in den Kopfstützen der Fahrzeugsitze Airbags eingebaut werden, die speziell einen Schutz im Kopf und Halsbereich der Fahrzeuginsassen bieten sollen. Zusammen mit den Airbags sind auch die für deren Auslösung erforderlichen Zündendstufen (Zündelement mit Steuerelektronik) in den Kopfstützen zu integrieren. Diese Zündendstufen werden in der Regel von einem zentralen Steuergerät im Fahrzeug aus angesteuert. Zwischen dem Steuergerät und der in einer Kopfstütze integrierten Zündendstufe findet in beiden Richtungen eine Signalübertragung statt. Zum Beispiel wird vom Steuergerät aus im Falle eines Crashes ein Auslösesignal an die Zündendstufe übertragen oder es werden Diagnosesignale der ständig auf ihre Funktionsfähigkeit zu überprüfenden Zündendstufe an das Steuergerät übermittelt. Sofern die Zündendstufe Schaltungseinheiten enthält, die mit Strom zu versorgen sind, muß auch von dem Steuergerät zu der Zündendstufe die erforderliche Energie übertragen werden. Ebenso kann in einer Kopfstütze ein Sensor integriert sein, der mittels Ultraschall oder optischer oder elektromagnetischer Wellen eine Sitzbelegungserkennung durchführt.

Da die Kopfstütze ein bewegbares Teil ist und deshalb die in ihr integrierten Schaltungseinheiten gegenüber dem Steuergerät eine nicht ständig feste Position haben, ist die Signalübertragung nicht mit festen Leitungsverbindungen durchzuführen. Der Erfindung liegt daher die Aufgabe zugrunde, eine Vorrichtung zur Übertragung von Signalen an ein oder mehrere in einer Kopfstütze eines Fahrzeugsitzes integrierte Schaltungeinheiten anzugeben, die ohne verschleißanfällige Übertragungsmittel auskommt.

### Vorteile der Erfindung

Die genannte Aufgabe wird mit den Merkmalen des Anspruchs 1 dadurch gelöst, daß die Signalübertragung über mindestens eine in der Rückenlehne des Fahrzeugsitzes angeordnete Induktionsspule und eine oder beide der in der Rückenlehne verschiebbar gelagerten und mit der mindestens einen Spule induktiv gekoppelten Führungsstab/- stäbe der Kopfstütze erfolgt. Diese Vorrichtung stellt eine kontaktfreie Signalverbindung zu einer oder mehreren Schaltungseinheiten in einer Kopfstütze dar, wobei auf verschleißanfällige Schleifkontakte oder Kabelverbindungen verzichtet wird. Dadurch, daß die Führungsstäbe der Kopfstütze mit in die Signalübertragung einbezogen werden, reduziert sich der Aufwand für die Übertragungsvorrichtung erheblich. Die Vorrichtung besteht aus wenigen Einzelteilen, was deren Montage vereinfacht.

Vorteilhafte Weiterbildungen der Erfindung gehen aus den Unteransprüchen hervor. Danach kann mindestens einer der beiden Führungsstäbe mit einer Sekundärspule bewickelt sein, welche mit mindestens einer Primärspule in der Rückenlehne einen Übertrager bildet, wobei die Sekundärspule über eine solche Länge verteilt auf dem Führungsstab gewickelt ist, daß in jeder Position der Kopfstütze eine induktive Kopplung zwischen den Spulen besteht. Die Sekundärspule auf dem Führungsstab wird zweckmäßigerweise von einer isolierenden Hülse umgeben. Die Primärspule umschließt den die Sekundärspule tragenden Führungsstab coaxial und liegt in einem Ringkern mit U-förmigem Querschnitt, der den magnetischen Fluß auf die Sekundärspule konzentriert.

In einer weiteren vorteilhaften Ausführung sind die beiden Führungsstäbe an ihren Enden in der Kopfstütze und in der Rückenlehne miteinander elektrisch verbunden, so daß dadurch eine Leiterschleife entsteht, in die durch die mindestens eine in der Rückenlehne angeordnete Spule ein Strom induziert wird. In der Kopfstütze sind Mittel vorgesehen, mit denen der induzierte Strom aus der Leiterschleife auskoppelbar ist. Diese Mittel können zum Beispiel aus einem in die Leiterschleife eingefügten Widerstand oder aus einer mit der Leiterschleife gekoppelten Spule bestehen.

Gemäß einem weiteren vorteilhaften Ausführungsbeispiel bestehen beide Führungsstäbe aus ferromagnetischem Material, und sie sind durch in der Kopfstütze und in der Rückenlehne vorhandene ferromagnetische Verbindungsstücke zu einem magnetischen Kreis zusammengeschlossen. In der Kopfstütze ist eine Wicklung vorhanden, die mit dem magnetischen Kreis gekoppelt ist.

Eine in der Kopfstütze integrierte Schaltungseinheit kann zum Beispiel eine Zündendstufe oder ein Sitzbelegungssensor sein.

### Zeichnung

Anhand mehrerer in der Zeichnung dargesteller Ausführungsbeispiele wird nachfolgend die Erfindung näher erläutert. Es zeigen:
Figur 1 eine Signalübertragungsvorrichtung mit einer Primärspule in der Rückenlehne und einer auf einen Führungsstab der Kopfstütze aufgewickelten Sekundärspule,
Figur 2 eine Signalübertragungsvorrichtung mit einer ersten Spule in der Rückenlehne und einer zweiten Spule in der Kopfstütze, die beide mit einem aus den Führungsstäben der Kopfstütze gebildeten magnetischen Kreis gekoppelt sind,
Figur 3 eine Signalübertragungsvorrichtung mit einer Spule in der Rückenlehne, die mit einer aus den Führungsstäben der Kopfstütze gebildeten Leiterschleife induktitv gekoppelt ist, und
Figur 4 eine Übertragungsvorrichtung mit einer ersten Spule in der Rückenlehne und einer zweiten Spule in der Kopfstütze, die beide mit einer aus den Führungsstäben der Kopfstütze gebildeten Leiterschleife induktiv gekoppelt sind.

### Beschreibung von Ausführungsbeispielen

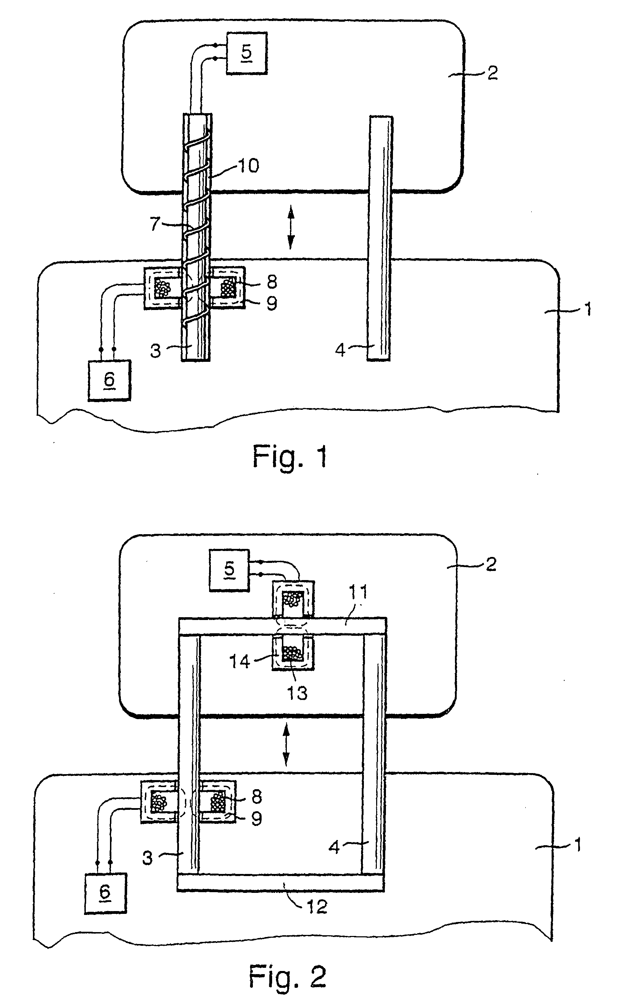

In den Figuren 1 bis 4 ist schematisch eine Rückenlehne 1 eines Fahrzeugsitzes mit einer Kopfstütze 2 dargestellt, wobei die Kopfstütze über Führungsstäbe 3 und 4 in der Rückenlehne 1 höhenverstellbar gelagert ist. In der Kopfstütze 2 ist eine Schaltungseinheit 5 integriert, die beispielsweise eine Zündendstufe für einen Airbag oder ein Sitzbelegungssensor oder eine andere in der Kopfstütze 2 zweckmäßigerweise integrierbare Schaltung sein kann. Natürlich können auch mehrere als nur eine Schaltungseinheit in der Kopfstütze 2 untergebracht sein.

Zwischen der Schaltungseinheit 5 in der Kopfstütze 2 und einer auf der Seite der Rückenlehne 1 (oder an einem anderen Ort im Fahrzeug) angeordneten Schaltung 6 (zum Beispiel Steuergerät) soll eine Signalübertragung ohne eine galvanische Verbindung zwischen beiden Schaltungen 5 und 6 möglich sein. In den Figuren 1 bis 4 sind verschiedene Varianten für solch eine Signalübertragungsvorrichtung dargestellt.

Gemäß dem in der Figur 1 dargestellten Ausführungsbeispiel ist der Führungsstab 3 der Kopfstütze 2 mit einer Spule 7 bewickelt, deren Ausgänge mit der Schaltungseinheit 5 in der Kopfstütze 2 verbunden sind. Diese Spule 7 stellt die Sekundärwicklung zu einem Übertrager dar, dessen Primärwicklung 8 in der Rückenlehne 1 angeordnet ist und den mit der Sekundärwicklung 7 bewickelten Führungsstab 3 koaxial umgibt. An die Ausgänge der Primärspule 8 ist die Schaltung 6 in der Rückenlehne 1 angeschlossen. Vorzugsweise liegt die Primärspule 8 in einem U-förmigen Ringkern 9. Der in der Figur 1 dargestellte Querschnitt des Ringkerns 9 verdeutlicht dessen U-Form. Mit dem so geformten Ringkern aus ferromagnetischem Material wird das Magnetfeld, dessen Verlauf durch strichlinierte Linien angedeutet ist, zur Vermeidung von Feldstreuungen auf den Ringkern 9 und die Sekundärspule 7 an Führungsstab 3 konzentriert. Der Führungsstab 3 mit seiner darauf gewickelten Sekundärspule 7 läßt sich berührungsfrei durch den Ringkern 9 auf und ab bewegen. Damit in jeder Position der Kopfstsütze 2 eine induktive Kopplung zwischen der Primärspule 8 und der Sekundärspule 7 besteht, ist die Sekundärspule 7 über einen entsprechend langen Bereich auf den Führungsstab 3 aufgewickelt.

Abweichend von dem in der Figur 1 dargestellten Ausführungsbeispiel können auch mehrere Primärspulen mit der Sekundärspule 7 induktiv gekoppelt sein, um verschiedenartige Signale an unterschiedliche Schaltungseinheiten in der Kopfstütze 2 zu übertragen. Die Verschiedenartigkeit der Signale kann sich in unterschiedlichen Frequenzen oder Amplituden äußern. Auch kann der zweite Führungsstab 4 in gleicher Weise wie der Führungsstab 3 für eine Signalübertragug ausgenutzt werden. Diese Signalübertragung kann entweder redundant zu der Signalübertragung über den Führungsstab 3 sein oder für weitere Schaltungseinheiten in der Kopfstütze 2 vorgesehen werden.

Zum mechanischem Schutz und zur elektrischen Isolation ist über die Sekundärspule 7 auf dem Führungsstab 3 eine Kunststoffhülse 10 geschoben, bzw. die Sekundärspule 7 ist in der Hülse 10 eingegossen.

Gemäß dem in der Figur 2 dargestellten Ausführungsbeispiel bestehen die beiden Führungsstäbe 3 und 4 der Kopfstütze 2 aus einem ferromagnetischem Material. In der Kopfstütze 2 und in der Rückenlehne 1 sind die Führungsstäbe 3 und 4 durch Verbindungsstäbe 11 und 12, die ebenfalls aus ferromagnetischem Material bestehen, zu einem magnetischen Kreis zusammengeschlossen. In der Rückenlehne 1 ist der magnetische Kreis 3, 4, 11, 12 mit einer ersten Spule 8 gekoppelt, die, wie bereits im Zusammenhang mit Figur 1 beschrieben, in einem Ringkern 9 mit U-förmigem Querschnitt liegt. Der Ringkern 9 mit der Spule 8 umgibt den verschiebbar gelagerten Führungsstab 3. In der Kopfstütze 2 ist eine zweite Spule 13, die ebenfalls in einem Ringkern 14 mit U-förmigem Querschnitt liegt, angeordnet. Die zweite Spule 13 in dem Ringkern 14, welche mit der Schaltungseinheit 5 verbunden ist; umgibt das Verbindungsstück 11, kann aber genauso um den Führungsstab 3 oder 4 herum angeordnet sein. Über dem magnetischen Kreis, bestehend aus den Führungsstäben 3, 4 und den Verbindungsstücken 11, 12, sind die beiden Spulen 8 und 13 induktiv gekoppelt, womit eine Signalübertragung zwischen den Schaltungen 6 und 5 möglich ist.

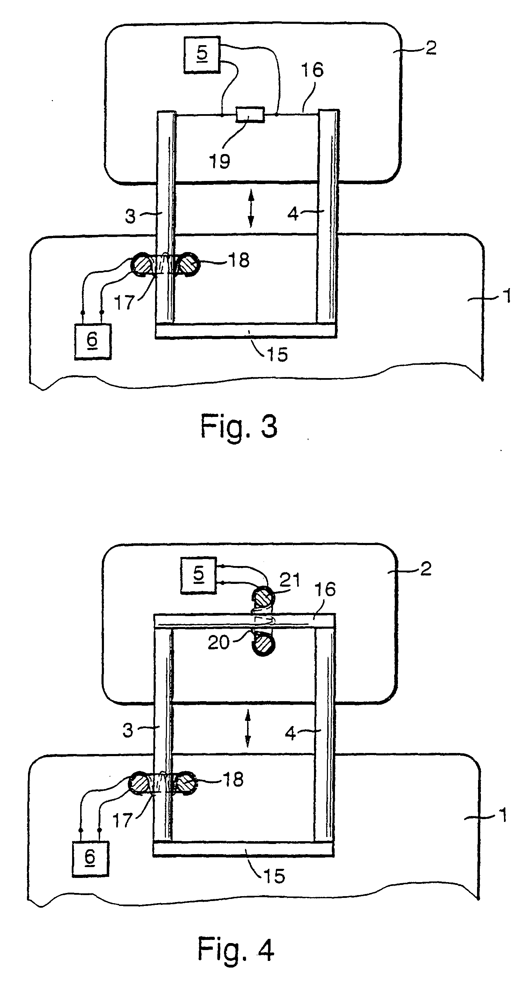

Bei dem in der Figur 3 dargestellten Ausführungsbeispiel sind die elektrisch leitfähigen Führungsstäbe 3 und 4 der Kopfstütze 2 mit Verbindungen 15 und 16 in der Rückenlehne 1 und in der Kopfstütze 2 zu einer Leiterschleife zusammengeschlossen. In der Rückenlehne 1 ist der Führungsstab 3 von einer ersten, mit der Schaltung 6 in der Rückenlehne 1 verbundenen Spule 17 umgeben. Die Spule 17 ist auf einen als Toroid ausgebildeten Kern 18 aufgewickelt, der den Führungsstab 3 umschließt. Durch diese Art Wicklung der Spule 7 entsteht ein den Führungsstab 3 kreisförmig umlaufendes magnetisches Feld, wodurch in der Leiterschleife, bestehend aus den Führungsstäben 3 und 4 und den Verbindungen 15 und 16 ein Strom fließt. Der in der Leiterschleife induzierte Strom kann über einen Widerstand 19, der in den Verbindungsleiter 16 in der Kopfstütze 2 eingefügt ist, abgegriffen und der Schaltungseinheit 5 zugeführt werden. Ebenso kann in die Leiterschleife von der Schaltung 5 aus ein Signal an den Widerstand 19 gelegt werden, infolge dessen ein Strom durch die Leiterschleife fließt, der wiederum in der Spule 17 einen Strom induziert. So ist also eine Übertragung von der Schaltung 6 in der Rückenlehne 1 zu der Schaltung 5 in der Kopfstütze 2 und auch in umgekehrter Richtung möglich.

Wie die Figur 4 zeigt, kann anstelle des Widerstandes 19 auch eine zweite Spule 20 mit der Leiterschleife 3, 4, 15, 16 gekoppelt werden. Die zweite Spule 20, welche mit der Schaltung 5 in der Kopfstütze 2 verbunden ist, ist wie die Spule 17 in der Rückenlehne 1 ebenfalls auf einen toroidförmigen Kern 21 gewickelt, der die Verbindungsleitung 16 der Leiterschleife (oder stattdessen den Führungsstab 3 oder 4) koaxial umläuft. So entsteht über die Leiterschleife eine Kopplung zwischen den beiden Spulen 17 und 20, womit eine Signalübertragung in beide Richtungen zwischen den Schaltungen 5 und 6 möglich ist.

## Patentansprüche

1. Vorrichtung zum Übertragen von Signalen an ein oder mehrere in einer Kopfstütze eines Fahrzeugsitzes integrierte Schaltungseinrichtungen, **dadurch gekennzeichnet, daß** die Signalübertragung über mindestens eine in der Rückenlehne (1) des Fahrzeugsitzes angeordnete Induktionsspule (8, 17) und einen oder beide der in der Rückenlehne (1) verschiebbar gelagerten und mit der mindestens einen Spule (8, 17) induktiv gekoppelten Führungsstab/-stäbe (3, 4) der Kopfstütze (2) erfolgt.

2. Vorrichtung nach Anspruch 1, **dadurch gekennzeichnet, daß** mindestens einer der beiden Führungsstäbe (3, 4) mit einer Sekundärspule (7) bewickelt ist, welche mit mindestens einer Primärspule (8) in der Rückenlehne (1) einen Übertrager bildet, und daß die Sekundärspule (7) über eine solche Länge verteilt auf dem Führungsstab (3) gewickelt ist, daß in jeder Position der Kopfstütze (2) eine induktive Kopplung zwischen den Spulen (7, 8) besteht.

3. Vorrichtung nach Anspruch 2, **dadurch gekennzeichnet, daß** die Sekundärspule (7) auf dem Führungsstab (3) von einer isolierenden Hülse (10) umgeben ist.

4. Vorrichtung nach Anspruch 2, **dadurch gekennzeichnet, daß** die Primärspule (8) den die Sekundärspule (7) tragenden Führungsstab (3) koaxial umschließt.

5. Vorrichtung nach Anspruch 4, **dadurch gekennzeichnet, daß** die Primärspule (8) in einem Ringkern (9) mit U-förmigem Querschnitt liegt.

6. Vorrichtung nach Anspruch 1, **dadurch gekennzeichnet, daß** beide Führungsstäbe (3, 4) in der Kopfstütze (2) und in der Rüchenlehne (1) miteinander elektrisch verbunden sind, so daß dadurch eine Leiterschleife entsteht, in die durch die mindestens eine in der Rückenlehne (1) angeordnete Spule (17) ein Strom induzierbar ist, und daß in der Kopfstütze (2) Mittel (19, 20, 21) vorgesehen sind, mit denen der induzierte Stom aus der Leiterschleife (3, 4, 15, 16) auskoppelbar ist.

7. Vorrichtung nach Anspruch 6, **dadurch gekennzeichnet, daß** die Mittel aus einem in die Leiterschleife (3, 4, 15) eingefügten Widerstand (19) bestehen.

8. Vorrichtung nach Anspruch 6, **dadurch gekennzeichnet, daß** die Mittel aus einer Spule (20, 21) bestehen, welche mit der den induzierten Strom führenden Leiterschleife (3, 4, 15, 16) gekoppelt ist.

9. Vorrichtung nach Anspruch 1, **dadurch gekennzeichnet, daß** beide Führungsstäbe (3, 4) aus ferromagnetischem Material bestehen und durch in der Kopfstütze (2) und in der Rückenlehne (1) vorhandene ferromagnetische Verbindungsstücke (11,12) zu einem magnetischen Kreis zusammengeschlossen sind und daß in der Kopfstütze (2) eine Spule (13) vorhanden ist, die mit dem magnetischen Kreis (3, 4, 11, 12) gekoppelt ist.

10. Vorrichtung nach einem der Ansprüche 1-9, **dadurch gekennzeichnet, daß** die Schaltungseinheit (5) in der Kopfstütze (2) eine Zündendstufe für einen Airbag ist.

11. Vorrichtung nach einem der Ansprüche 1-9, **dadurch gekennzeichneten**, daß die Schaltungseinheit (5) in der Kopfstütze (2) ein Sitzbelegungssensor ist.

## Claims

1. Device for transmitting signals to one or more circuit devices integrated in a head restraint of a vehicle seat, **characterized in that** the signal transmission takes place via at least one induction coil (8, 17) arranged in the backrest (1) of the vehicle seat and one or both of the guide rods (3, 4) of the head restraint (2), which guide rod/rods is/are mounted displaceably in the backrest (1) and is/are inductively coupled to the at least one coil (8, 17).

2. Device according to Claim 1, **characterized in that** at least one of the two guide rods (3, 4) has a secondary coil (7) coiled around it, said secondary coil forming a transformer together with at least one primary coil (8) in the backrest (1), and **in that** the secondary coil (7) is distributed over such a length of the guide rod (3) that there is an inductive coupling between the coils (7, 8) in every position of the head restraint (2).

3. Device according to Claim 2, **characterized in that** the secondary coil (7) is surrounded on the guide rod (3) by an insulating sleeve (10).

4. Device according to Claim 2, **characterized in that** the primary coil (8) coaxially surrounds the guide rod (3) bearing the secondary coil (7).

5. Device according to Claim 4, **characterized in that** the primary coil (8) is situated in an annular core (9) having a U-shaped cross section.

6. Device according to Claim 1, **characterized in that** the two guide rods (3, 4) in the head restraint (2) and in the backrest (1) are electrically connected to each other in such a manner that a conductor loop is produced in which a current can be induced by means of the at least one coil (17) arranged in the backrest (1), and **in that** means (19, 20, 21) are provided in the head restraint (2) and can be used to decouple the induced current from the conductor loop (3, 4, 15, 16).

7. Device according to Claim 6, **characterized in that** the means comprise a resistor (19) fitted into the conductor loop (3, 4, 15).

8. Device according to Claim 6, **characterized in that** the means comprise a coil (20, 21) which is coupled to the conductor loop (3, 4, 15, 16) conducting the induced current.

9. Device according to Claim 1, **characterized in that** the two guide rods (3, 4) consist of ferromagnetic material and are joined together by ferromagnetic connecting pieces (11, 12), which are present in the head restraint (2) and in the backrest (1), to form a magnetic circuit, and **in that** a coil (13) which is coupled to the magnetic circuit (3, 4, 11, 12) is present in the head restraint (2).

10. Device according to one of Claims 1-9, **characterized in that** the circuit unit (5) in the head restraint (2) is a final ignition stage for an airbag.

11. Device according to one of Claims 1-9, **characterized in that** the circuit unit (5) in the head restraint (2) is a seat occupation sensor.

## Revendications

1. Dispositif pour transmettre des signaux à un ou plusieurs circuits intégrés dans un appuie-tête d'un siège de véhicule,
**caractérisé en ce que**
la transmission de signal s'effectue à l'aide d'au moins une bobine d'induction (8, 17) disposée dans le dossier (1) du siège de véhicule et d'une ou des deux barre(s) de guidage (3, 4) des appuie-tête (2), placée(s) de manière déplaçable dans le dossier (1) et couplée(s) de manière inductive à au moins une bobine (8, 17).

2. Dispositif selon la revendication 1,
**caractérisé en ce qu'**
au moins l'une des deux barres de guidage (3, 4) est enroulée à une bobine secondaire (7), laquelle forme un transformateur avec au moins une bobine primaire (8) dans le dossier (1), et la bobine secondaire (7) est enroulée sur une longueur répartie sur la barre de guidage (3) telle que dans chaque position de l'appuie-tête (2) on a un couplage inductif entre les bobines (7, 8).

3. Dispositif selon la revendication 2,
**caractérisé en ce que**
la bobine secondaire (7) sur la barre de guidage (3) est entourée d'une douille isolante (10).

4. Dispositif selon la revendication 2,
**caractérisé en ce que**
la bobine primaire (8) entoure coaxialement la barre de guidage (3) portant la bobine secondaire (7).

5. Dispositif selon la revendication 4,
**caractérisé en ce que**
la bobine primaire (8) repose dans un noyau toroïdal (9) avec une section en forme de U.

6. Dispositif selon la revendication 1,
**caractérisé en ce que**
les deux barres de guidage (3, 4) sont raccordées électriquement entre elles dans l'appuie-tête (2) et dans le dossier (1), de sorte qu'il en résulte une boucle conductrice dans laquelle un courant peut être induit par la au moins une bobine (17) disposée dans le dossier (1), et des moyens (19, 20, 21) sont prévus dans l'appuie-tête (2), avec lesquels le courant induit peut être déclenché par la boucle conductrice (3, 4, 15, 16).

7. Dispositif selon la revendication 6,
**caractérisé en ce que**
les moyens proviennent d'une résistance (19) insérée dans la boucle conductrice (3, 4, 15).

8. Dispositif selon la revendication 6,
**caractérisé en ce que**
les moyens proviennent d'une bobine (20, 21) couplée à la boucle conductrice (3, 4, 15, 16) guidant le courant induit.

9. Dispositif selon la revendication 1,
**caractérisé en ce que**
les deux barres de guidage (3, 4) sont en matériau ferromagnétique et raccordées ensemble à un circuit magnétique par les pièces de raccordement (11, 12) ferromagnétiques présentes dans l'appuie-tête (2) et dans le dossier (1), et unebobine (13) est présente dans l'appuie-tête (2), qui est couplée au circuit magnétique (3, 4, 11, 12).

10. Dispositif selon l'une quelconque des revendications 1 à 9,
**caractérisé en ce que**
le circuit intégré (5) dans l'appuie-tête (2) est un degré d'amorçage d'un airbag.

11. Dispositif selon l'une quelconque des revendications 1 à 9,
**caractérisé en ce que**
le circuit intégré (5) est un capteur de position d'assise dans l'appuie-tête (2).
